# EUROPÄISCHE PATENTSCHRIFT

(11) **EP 0 506 721 B1**
(45) Veröffentlichungstag und Bekanntmachung des Hinweises auf die Patenterteilung: **08.03.1995**
(21) Anmeldenummer: 91900722.9
(22) Anmeldetag: 20.12.1990
(51) Int. Cl.: B29C 70/00

(54) **ZUGBEANSPRUCHTES FASERTECHNISCHES BAUTEIL**
TECHNICAL FIBRE STRUCTURAL MEMBER SUBJECTED TO TENSILE STRESS
ELEMENT STRUCTURAL EN FIBRE TECHNIQUE SOLLICITE EN TRACTION

(30) Priorität: 20.12.1989 DE 3942024
(43) Veröffentlichungstag der Anmeldung: 07.10.1992
(73) Patentinhaber: MTU MOTOREN- UND TURBINEN-UNION MÜNCHEN GMBH, D-80976 München (DE)
(72) Erfinder: NEUBERT, Horst, D-8025 Unterhaching (DE)
(86) Internationale Anmeldenummer: DE9000979
(87) Internationale Veröffentlichungsnummer: WO9108893

(56) Entgegenhaltungen:
- WO-A-85/03683
- WO-A-88/08065
- FR-A- 1 579 649
- FR-A- 2 060 049
- FR-A- 2 344 392
- FR-A- 2 590 608

## Beschreibung

Die Erfindung bezieht sich auf ein zugbeanspruchtes fasertechnisches Bauteil, welches zumindest einendig von der Zugrichtung abweichende Abstützflächen für die formschlüssige Abstützung an einem separaten Stützbauteil aufweist, mit einer Vielzahl von in Zugrichtung parallel ausgerichteter Faserstrangplatten, zwischen denen Druckplatten angeordnet sind, welche über den die Zugbelastung aufnehmenden Querschnitt (q) der Faserstrangplatten hinausstehende Abschnitte aufweisen, die die Abstützflächen ausbilden. Ein fasertechnisches Bauteil dieser Gattung ist aus der FR-A 23 44 392 bekannt.

Fasertechnische Bauteile sind in der Lage, sehr hohe Zugbeanspruchungen ohne Bruch zu verarbeiten, und eignen sich daher und aufgrund ihres geringen Gewichtes zur Übertragung derartiger Zuglasten. Ein Problem ist dabei jedoch die Krafteinleitung vom fasertechnischen Bauteil in ein die Zugkräfte aufnehmendes Stützelement, weil bei der Krafteinleitung nur geringe Schubspannungen auftreten dürfen, bzw. ganz vermieden werden sollten, da die Schubfestigkeit von Faserwerkstoffen erheblich unterhalb der Zugfestigkeit liegt.

Bei dem gattungsgemäßen fasertechnischen Bauteil nach der FR-A 23 44 392 erfolgt die Krafteinleitung von den Fasersträngen in das Stützbauteil dadurch, daß hammerförmige konisch ausgebildete Metallplatten mehrschichtig mit den Fasersträngen mittels eines Außengehäuses verspannt werden. Diese Lösung hat den Nachteil, daß durch das Gehäuse und die Spannmittel Bauraum benötigt wird, der in vielen Anwendungsfällen nicht zur Verfügung steht und daß nur eine relativ geringe Anzahl von hammerförmigen Druckplatten vorgesehen werden kann, da deren Dicke wegen der notwendigen Konizität einerseits und einer Mindestbiegesteifigkeit andererseits ein gewisses Mindestmaß nicht unterschreiten darf. Auf diese Weise ist die Übertragbarkeit von Zugkräften von den Fasersträngen auf das Stützbauteil doch wieder eingeschränkt.

Aus der WO-A 85/03683 ist ein zugbeanspruchtes fasertechnisches Bauteil bekannt, bei dem zwischen flächig ausgebildeten Fasersträngen Metallbleche mit Vielfachlochung eingelegt sind, die einendig über die Faserstränge hinausragen und somit in ihrer Gesamtheit als Druckplatten für die formschlüssige Abstützung an einem Stützbauteil dienen können. Die Übertragung der Zugkräfte von den Fasersträngen auf die Lochbleche erfolgt zum einen durch Haftreibung zwischen der Fasermatrix und den Lochblechen, zum anderen dadurch, daß beim Herstellen dieses fasertechnischen Bauteils die viskose Matrix in die Bohrungen der Lochbleche eindringt und somit nach Aushärtung eine formschlüssige Verbindung zwischen Fasermatrix und Lochblech besteht. Die Verwendbarkeit dieses vorbekannten fasertechnischen Bauteils ist insofern eingeschränkt, als über die sich in Faserstrangrichtung erstreckenden freien Laschen der Lochbleche mittels einer Bolzenbefestigung nur Zugkräfte übertragen werden können und insoweit ausreichend Baulänge für den Anschluß des fasertechnischen Bauteils an andere Stützbauteile zur Verfügung stehen muß. Eine Formgebung der Lochbleche so, daß sie über den Querschnitt der Faserstränge hinausstehende Abschnitte aufweisen, an denen sie Abstützflächen ausbilden, kommt deshalb nicht in Betracht, weil dann in unzulässiger Weise Biege- und Scherbeanspruchungen auf den Lochbereich dieser Lochbleche übertragen würden, was bei Lochblechen nur in geringem Maß zulässig ist. Insoweit könnte die hohe durch die Faserstränge übertragbare Zugbelastung nicht in ein separates Stützbauteil überführt werden.

Hiervon ausgehend ist es Aufgabe der vorliegenden Erfindung, ein zugbeanspruchtes fasertechnisches Bauteil, welches zumindest einendig formschlüssig abstützbar ist zu schaffen, bei dem im Befestigungsbereich nur geringer zusätzlicher Platz beansprucht wird, und gleichzeitig eine möglichst fasergünstige Kräfte- und Spannungsverteilung erzielt wird.

Erfindungsgemäß wird diese Aufgabe durch die Merkmale der Patentansprüche 1 oder 2 oder 3 gelöst.

Der Grundgedanke der Erfindung besteht darin, daß das zugbeanspruchte Bauteil in zwei Arten unterschiedlich aufgebauter Elemente aufgeteilt wird. Die Druckplatten dienen zur Aufnahme von Druck- und Schubkräften und stehen in Formschluß mit dem sie umgebenden Stützbauteil. Die plattenförmigen Faserstränge hingegen dienen der Aufnahme von Zugkräften. Die Verbindung der Druckplatten mit den Faserstrangplatten erfolgt durch Einbettung, so daß ein regelmäßiger Verbund entsteht. Durch die Schichtung einer Vielzahl von dünnen Druckplatten und Faserstrangplatten ergibt sich die Möglichkeit, die auftretenden Schubbelastungen soweit zu reduzieren, daß die Zugfestigkeit der Faser vollständig genutzt werden kann. Die Anzahl der verwendeten Elemente (d. h. jeweils eine Druckplatte bzw. eine Faserstrangplatte) hängt von den gegebenen Abmessungen des Bauteils und den gewählten Stärken der Plattendicke ab.

Die wesentlichsten Vorteile der Erfindung liegen darin, daß die Kraftübertragung zwischen den unter Zugbelastung stehenden Faserstrangplatten und den unter Drucklast stehenden Druckplatten über eine große Fläche erfolgt, wodurch die auftretenden Schubspannungen gering bleiben und sich nicht festigkeitsmindernd auswirken. Durch die Aneinanderreihung einer Vielzahl von gleichartigen Elementen, die miteinander verbunden sind, ist die Breite des fasertechnischen Bauteils leicht variierbar, wodurch Anpassungen an die auftretenden Belastungen durchgeführt werden können. Schließlich wird nur wenig Bauraum benötigt, um das Bauteil an einem separaten Stützbauteil abzustützen, indem die Druckplatten nur wenig seitlich über die Faserstrangplatten hinausragen müssen. Die Einbettung der Druckplatten hat weiterhin den Vorteil, daß über die schmalen Stirnflächen der Druckplatten Kräfte auf die Matrixzwischenlagen bzw. unterbrochenen Faserstrangplatten übertragen werden und durch die quasi homogene Verbindung dieser unterbrochenen Faserstrangplatten bzw. Matrixzwischenlagen mit den durchlaufenden Faserstrangplatten in letztere eingeleitet werden.

Vorzugsweise bestehen die Druckplatten aus einem hohe Schubkräfte übertragenden homogenen Material, wie z. B. Metall, Metalleinristallfasern oder Keramik.

Die Verbindung der Faserstrangplatten mit den Flächen der Druckplatten kann durch Kleben oder über die gemeinsame Harzmatrix vorgesehen sein.

Als Werkstoff für die Faserstrangplatten wählt man vorzugsweise Kohlefasern, Borfasern, Glasfasern, Aramidfasern oder Mischungen hiervon. Ausgeführte Faserstrangplatten haben vorzugsweise eine Dicke zwischen 5/100 - 5/10 mm, wobei sich als günstigste Dicke 1/10 mm herausgestellt hat, daß Faserstrangplatten dieser Dicke handelsüblich sind.

Die Lösung der gestellten Aufgabe gemäß Anspruch 2 sieht vor, daß die Druckplatten formschlüssig in entsprechend unterbrochene Faserstrangplatten oder in Matrixzwischenlagen eingebettet sind und das Bauteil rotationssymmetrisch aufgebaut ist, wobei am Umfang ein die Druckplatten und die Faserstrangplatten erfassendes Gewinde oder eine Ringnut eingeschnitten ist.

Eine Abstützung des formtechnischen Bauteils über das Gewinde bzw. die Ringnut stellt die den geringsten Bauraum beanspruchende Lösung dar.

Schließlich wird die gestellte Aufgabe auch dadurch gelöst, daß bei einem gattungsgemäßen fasertechnischen Bauteil die Druckplatten formschlüssig in entsprechend unterbrochene Faserstrangplatten oder in Matrixzwischenlagen eingebettet sind, wobei die Druckplatten unter einem spitzen Winkel zur Zugrichtung ausgerichtet sind. Der Hauptvorteil dieser erfindungsgemäßen Ausführung liegt darin, daß auf die Druckplatten praktisch keine Biegebeanspruchung mehr übertragen wird sondern die hohen Zugkräfte aus den Fasersträngen als Druckkräfte an den Endflächen der Druckplatten auftreten.

Ein Verfahren für die Herstellung eines erfindungsgemäßen Bauteiles ist dadurch gekennzeichnet, daß abwechselnd in Zugrichtung orientierte Faserstrangplatten und im spitzen Winkel hierzu orientierte Druckplatten zunächst aufeinandergelegt und anschließend mit Harz versetzt werden. Nachdem eine Anzahl oder alle Strukturelemente aufeinandergelegt sind, wird das Bauteil unter Druck einer erhöhten Temperatur für eine Zeit ausgesetzt, die geeignet ist das Harz auszuhärten. Bei üblichen Harzen liegt die Aushärtetemperatur etwa im Bereich von 150 °C - 200 °C, der untere Druck etwa im Bereich von 10 bis 50 bar, und die Zeitdauer des Aushärteprozesses beträgt ca. 1 - 4 Stunden.

Das fasertechnische Bauteil wird dadurch fertig bearbeitet, daß die Endkontur durch Fräsen bzw. Drehen des ausgehärteten Rohlings auf Endmaß erfolgt.

Die Erfindung wird nachfolgend anhand der beigefügten Zeichnung erläutert. Dabei zeigt:
- Fig. 1: eine grundlegende Ausführungsform eines erfindungsgemäßen fasertechnischen Bauteils in zwei orthogonalen Längsschnitten
- Fig. 2: eine Ansicht eines mit geneigten Druckplatten versehenen fasertechnischen Bauteils
- Fig. 3: eine weitere Ausführung mit geneigten Druckplatten
- Fig. 4: einen Querschnitt durch ein roationssymmetrisches Bauteil
- Fig. 5: die Ausführung gemäß Fig. 4 im Längsschnitt
- Fig. 6: einen Längs- und Querschnitt durch ein erfindungsgemäßes Bauteil, bei dem die Abstützflächen durch umlaufende Ringnuten gebildet werden,
- Fig. 7: einen Schnitt durch ein Zugbauteil,
- Fig. 8: die Ausführung gemäß Fig. 7 im Querschnitt
- Fig. 9: ein weiteres als Gewindebolzen ausgebildetes erfindungsgemäßes Zugbauteil,
- Fig. 10: das Bauteil gemäß Fig. 9 im Schnitt
- Fig. 11: ein schematisches Schrägbild eines Zugbauteils
- Fig. 12: ein Schrägbild eines Zugbauteils, bei dem auch die Druckplatten aus fasertechnischem Material bestehen
- Fig. 13: einen Schnitt durch den Fußbereich einer erfindungsgemäß gestalteten Turboschaufel.

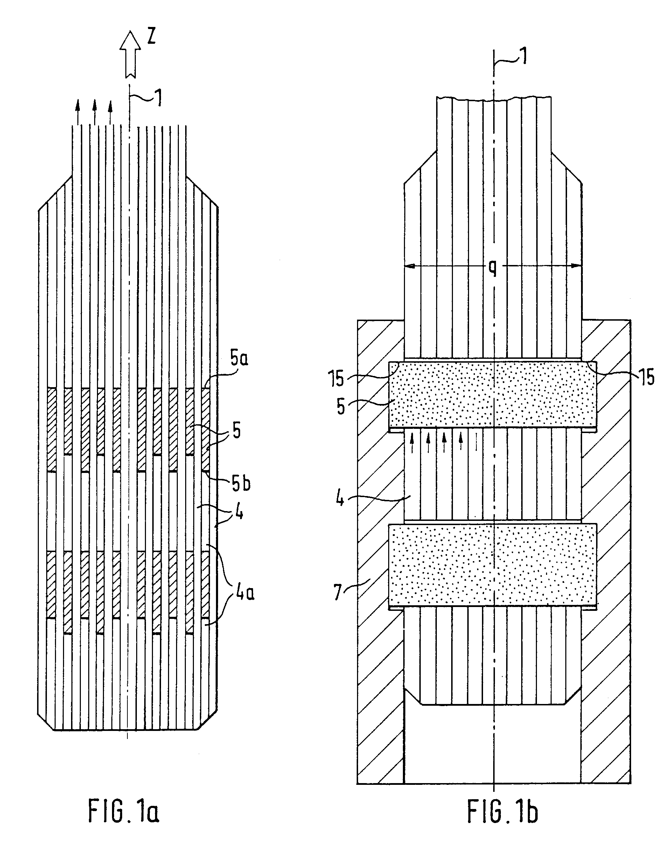

Die in Fig. 1 dargestellte grundlegende Ausführungsform eines erfindungsgemäßen zugbeanspruchten fasertechnischen Bauteils besteht aus einer Vielzahl von in Zugrichtung Z parallel ausgerichteter Faserstrangplatten 4, zwischen denen Druckplatten 5 eingebettet sind. Wie aus dem Schnitt gemäß Fig. 1b erkennbar, stehen die Druckplatten 5 mit ihren Endabschnitten über den Querschnitt q der Faserstrangplatten hinaus. Die über den Querschnitt q hinausstehenden Abschnitte der Druckplatten 5 bilden die Abstützflächen 15 aus, mit denen das fasertechnische Bauteil formschlüssig an dem separaten Stützbauteil 7 abgestützt ist. Das in Fig. 1 dargestellte Bauteil soll rotationssymmetrisch bezüglich der Mittelachse 1 ausgebildet sein, so daß dementsprechend das Stützbauteil 7 als Hohlzylinder mit ringförmigen Ausnehmungen für die herausragenden Abschnitte der Druckplatten 5 gestaltet ist. Der erfindungsgemäße Aufbau eines solchen fasertechnischen Bauteils ist aber nicht an die äußere, etwa rotationssymmetrische Form gebunden, so daß das Bauteil in gleicher Weise im Querschnit polygonal gestaltet sein kann. Wie dem Schnitt nach Fig. 1a entnehmbar, sind die Druckplatten 5 formschlüssig in entsprechend unterbrochene Faserstrangplatten 4a eingebettet. Eine Kraftübertragung zwischen den Druckplatten 5 und den Faserstrangplatten 4 erfolgt vorzugsweise an den schmalen Stirnflächen 5a, 5b der Druckplatten. Die Krafteinleitung in die Faserstrangplatten 4 erfolgt über die unterbrochenen Faserstränge 4a, die zusammen mit den Faserstrangplatten 4 vorzugsweise eine integrale fasertechnische Struktur ausbilden. Auf diese Weise ist eine schubkraftübertragende Verbindung zwischen den Flächen der Druckplatten 5 und den Faserstrangplatten 4 nicht erforderlich. Dennoch kann eine solche Verbindung durch Kleben vorgesehen sein, falls extrem hohe Belastbarkeit gefordert wird. Die Druckplatten 5 können sehr dünn ausgebildet sein, so daß sich der aus Fig. 1a erkennbare laminare Aufbau des gesamten Bauteils ergibt. Um eine möglichst stetige Kraftübertragung zwischen den Druckplatten und den Faserstrangplatten 4 zu gewährleisten, sind die Druckplatten 5 abwechselnd von unterschiedlicher Länge. Sie können darüber hinaus in Zugrichtung Z versetzt angeordnet sein. In diesem Fall müssen dann allerdings die entsprechenden Stützflächen am Stützbauteil 7 angepaßt werden.

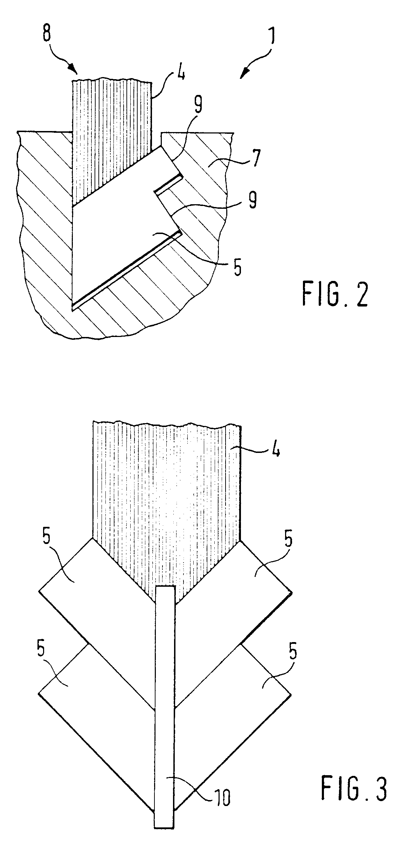

Bei der in Fig. 2 dargestellten Ausführungsform ist an der Faserstrangplatte 4 eine winklig angeordnete Druckplatte 5 angebracht, die in einem Stützbauteil 7 abgestützt ist. Diese beiden Bauteile bilden jeweils ein Strukturelement 8, von denen eine Vielzahl hinterinander angeordnet das zugbeanspruchte Bauteil bilden. Die Druckplatte5 verläuft in der gezeigten Ausführungsfrom über die Gesamtbreite der Faserstrangplatte 4 und überträgt die Zugkräfte an der Endfläche 9.Dabei weist die Druckplate 5, die vorzugsweise aus Metall besteht, einen gestuften Absatz zur Bildung der beiden Endflächen 9 auf.

Die Ausführungsform gemäß Fig. 3 ist derjenigen aus Fig. 2 ähnlich, wobei jedoch jeweils zwei zueinander geneigte Druckplatten 5 vorgesehen sind und an den Stoßstellen im Bereich der Längsmittelachse der Faserstrangplatten 4 eine Stützplatte 10 eingelassen ist, die eine verbesserte symmetrische Abstützung der Druckkräfte ermöglicht.

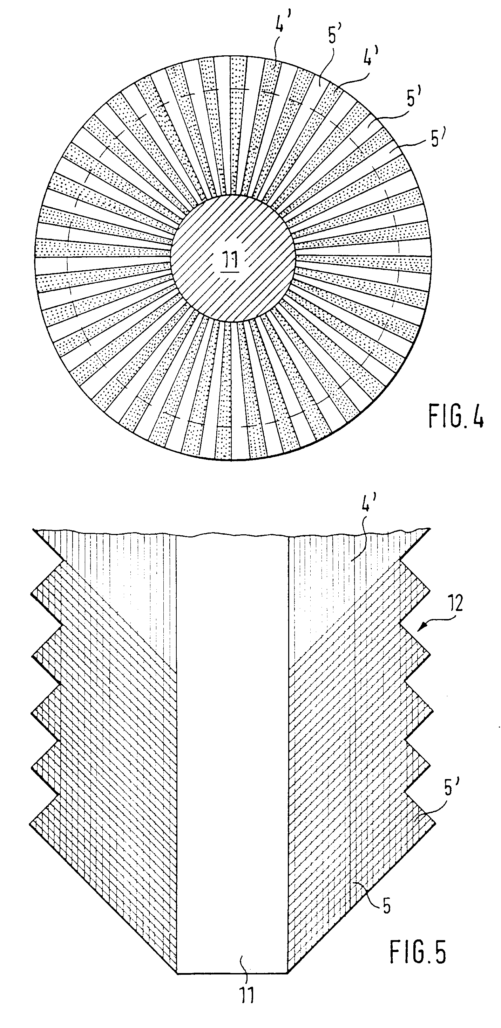

In Fig. 4 ist ein Querschnitt durch ein rotationssymmetrisches zugbeanspruchtes Bauteil gezeigt, bei dem die Faserstrangplatten 4 und die Druckplatten 5 im Querschnitt kreissektorartige Form aufweisen, und eine Anzahl von aus jeweils einer Faserstrangplatte 4 und einer oder mehreren übereinanderliegenden Druckplatten bestehenden Strukturelementen zusammen einen Vollkreis und somit das rotationssymmetrische Bauteil bilden. Im Zentrum ist ein Stützzylinder 11 angeordnet, der aus auf Druck beanspruchbarem Werkstoff, beispielsweise Metall oder Keramik besteht.

In Fig. 5 ist ein Teillängsschnitt des Bauteils gemäß Fig. 4 dargestellt, wobei erkennbar ist, daß die Faserstrangplatten 4 und die Druckplatten 5 die gleiche Außenkontur aufweisen. In den Außenumfang dieses zylindrischen Bauteiles ist durch Abdrehen oder Fräsen eine Zahnstruktur eingearbeitet worden, die gewindeartig ausgebildet sein kann, um so ein tragfähiges fasertechnisches Gewinde eines zugbeanspruchten Bauteiles herstellen zu können. Die Druckplatten 5 bestehen vorzugsweise aus Metallen oder anderen druckbeanspruchbaren Werkstoffen. Sollen jedoch extrem gewichtssparende Bauteile geschaffen werden, so kann für die Druckplatten auch Faserwerkstoff in Frage kommen. Die Faserorientierung ist dann vorzugsweise so zu wählen, daß sie senkrecht zu den Endflächen 9 verläuft, wie in Fig. 5 angedeutet.

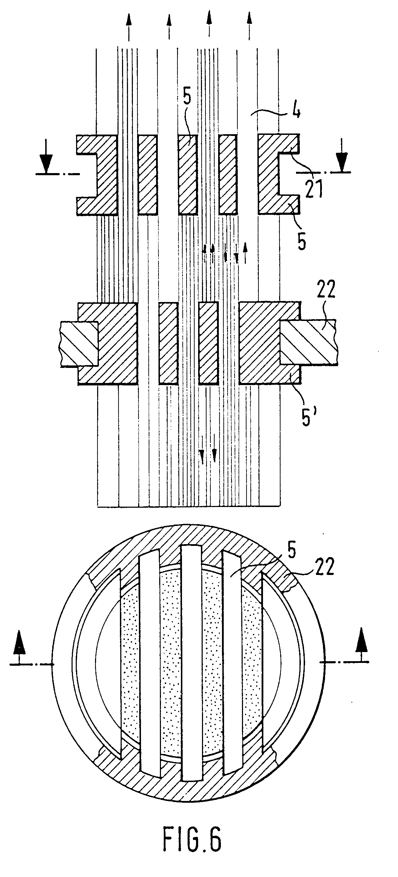

Das in Fig. 6 in Längs- und Querschnitt dargestellte zugbeanspruchte fasertechnische Bauteil unterscheidet sich von der grundliegenden Ausführungsform nach Fig. 1 dadurch, daß die Druckplatten an ihren über die Faserstrangplatten hinausstehenden Abschnitten mit einer Nut versehen sind, so daß sich bei einem rotationssymmetrischen Bauteil eine außen umlaufende Ringnut 21 ergibt. Diese umlaufende Ringnut 21 dient als formschlüssige Abstützung an einem entsprechend ringförmig ausgebildeten Stützbauteil in Form eines Metallträgers 22. Wie aus dem Längsschnitt gemäß Fig. 6 erkennbar, kann es wünschenswert sein, die in den Randzonen in Richtung quer zur Ebene der Faserstrangplatten 5 beidseitig angeordneten Druckplatten 5' mit größerer Dicke auszuführen als die im Zentralbereich des Bauteils angeordneten Druckplatten 5.

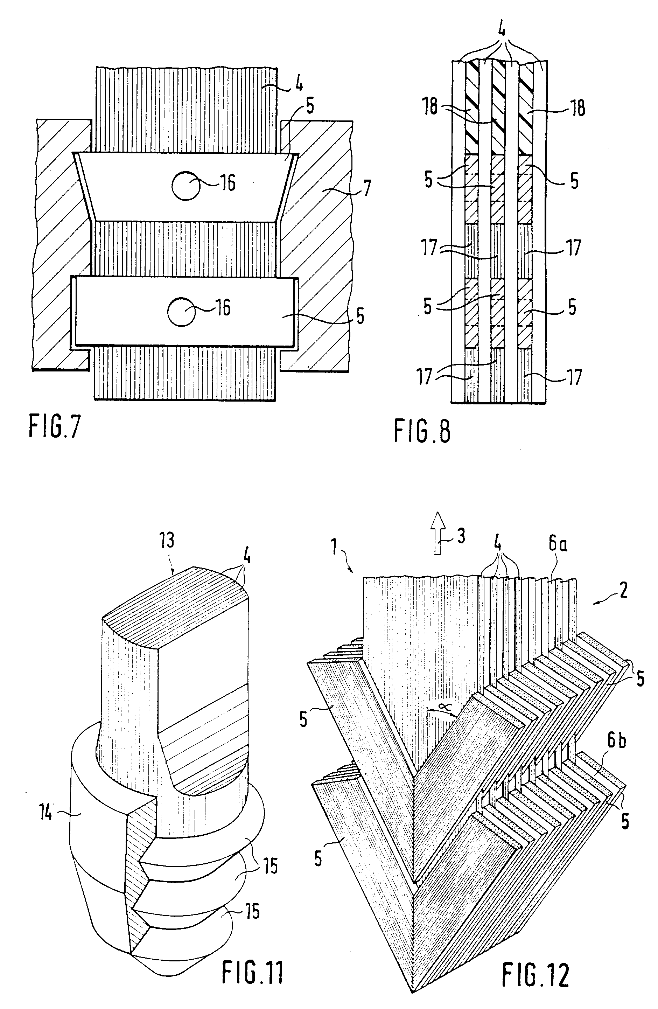

In Fig. 7 ist eine weitere Ausführungsfrom der Erfindung dargestellt, bei der zwei Reihen von Druckplatten 5 übereinander quer zur Erstreckung der Faserstrangplatten 4 ausgerichtet sind. Die obere Druckplatte weist abgeschrägte Flanken auf, während die untere Druckplatte 5 rechteckigen Querschnitt aufweist. Diese beiden unterschiedlichen Ausführungsformen sind nur zum Zwecke der Darstellung zusammen gezeigt, während in der Praxis entweder die eine oder die andere Ausführungsform gewählt werden wird. Die Druckplatten 5 weisen Bohrungen 16 zur Positionierung auf. Diese erfolgt dadurch, daß die Bohrungen von Harzmaterial von den beidseits der Druckplatten 5 angeordneten Faserstrangplatten 4 aufgefüllt werden und so ein Verrutschen der Druckplatten 5 verhindern.

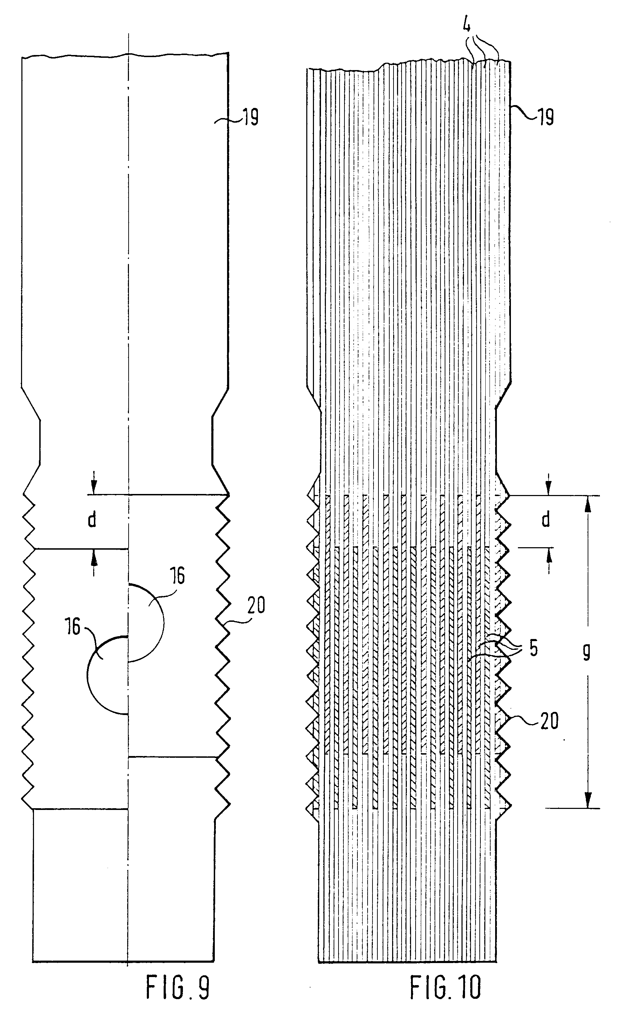

Die Ausführungsform gemäß Fig. 7 ist in Fig. 8 im Querschnitt dargestellt, wobei vier nebeneinander angeordnete Faserstrangplatten 4 vorhanden sind. Dazwischen sind die zwei Reihen von je drei Druckplatten 5 vorgesehen, wobei diese sich an Zwischenlagen 17 abstützen. Diese Zwischenlagen 17 können aus reinem Matrixmaterial oder ebenfalls aus Fasermaterial bestehen wie die Faserstrangplatten 4 und sind mittels der gemeinsamen Harzmatrix mit den benachbarten Faserstrangplatten verbunden. Durch gestrichelte Linien sind die mit Harz oder Laminat gefüllten Bohrungen 16 (vergl. Fig. 7) in den Druckplatten 5 angedeutet, die einen zapfenförmigen Formschluß ermöglichen, der zur Lastübertragung beiträgt.

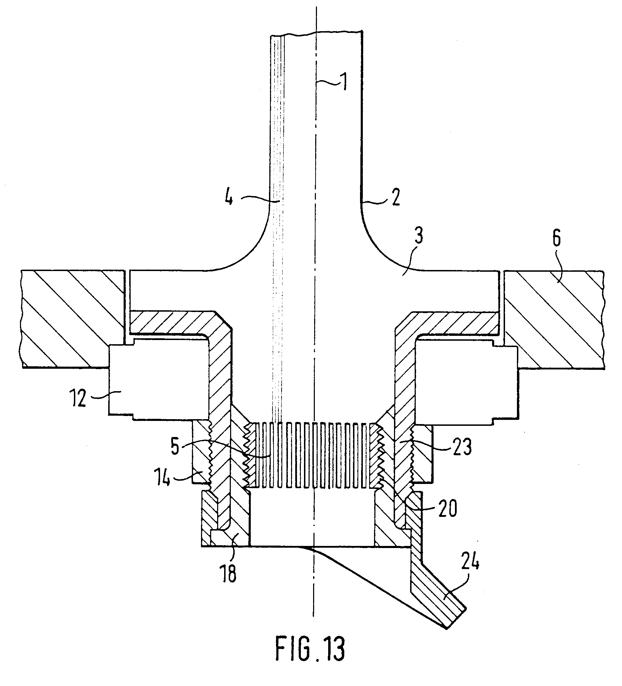

Eine weitere Ausführungsform der Erfindung ist in den Fig. 9 und 10 in zwei Ansichten gezeigt.

In den Fig. 9 und 10 ist ein rotationssymmetrisches Bauteil 19 dargestellt, das wiederum aus einer Vielzahl von lamellenartigen Faserstrangplatten 4 und Druckplatten 5 aufgebaut ist. Fig. 9 weist dabei zwei Schnitte durch benachbarte Druckplatten 5 gemäß Fig. 10 auf, die abwechselnd in Längsrichtung des Bauteiles 19 um die Strecke d versetzt sind, um eine ausgeglichenere Lastaufnahme zu erzielen. Das aus ebenen Platten 4 aufgebaute Bauteil 19 ist roationssymmetrisch abgedreht, wobei im Bereich g ein Gewinde eingeschnitten ist. Dieses Gewinde 20 bildet die Abstützfläche (Gewindeflanken) aus, wobei zwischen den vorzugsweise metallisch ausgebildeten Druckplatten 5 im Bereich die tragenden Gewindegänge unterbrochene Faserstrangplatten oder auch anderes Füllmaterial vorgesehen sein können, wie dies im Schnitt nach Fig. 10 gezeigt ist. Eine verbessere Aufnahme der Abstützkräfte läßt sich dadurch erreichen, daß die Druckplatten im Bereich der Randzonen, die quer zur Ebene der Faserstrangplatten liegen mit größerer Dicke ausgeführt sind, wie es in Fig. 6 mit den Bezugszeichen 5' gezeigt ist.

Fig. 11 zeigt eine schematische teilgeschnittene Schrägansicht einer Ausführungsform ähnlich der in Fig. 5 dargestellten. Ein aus einer Reihe von Faserstrangplatten 4 aufgebauter Zuganker 13 wird in einem Stützbauteil 7 dadurch gehalten, daß drei übereinliegender Reihen von Druckplatten 5 mit den Faserstrangplatten 4 verbunden sind. Das Stützbauteil 7 ist ortsfest angeordnet und nimmt die auf den Zuganker 13 aufgebrachten Kräfte auf. Dabei ist der Zuganker 13 innerhalb des Stützbauteiles 7 rotationssymmetrisch abgedreht, so daß ein etwa rotationssymmetrisches Tannenbaumprofil erzielt wurde.

Das in Fig. 12 dargestellte zugbeanspruchte Bauteil besteht im wesntlichen aus einem fasertechnischen Schaft 2, der in der mit Z bezeichneten Richtung durch Zugkräfte belastet ist, und an dem Einrichtungen zur Abstützung der Zugkräfte in ein nicht dargetelltes Stützgehäuse angebracht sind. Der fasertechnische Schaft besteht aus einer Anzahl parallel beabstandet ausgerichteter Faserstrangplatten 4, während die Stützeinrichtungen als Druckplatten 5 ausgebildet sind, die in den Zwischenräumen der benachbarten Faserstrangplatten 4 zur Bildung eines sandwichartigen Gebildes eingelassen sind. Der Gesamtaufbau des Bauteiles kann dabei so aufgefaßt werden, daß jeweils eine Faserstrangplatte 4 mit einer daran angebrachten Druckplatte 5 ein gemeinsames Strukturelement bilden, und das Gesamtbauteil aus einer Anzahl dieser Strukturelemente aufgebaut ist.

Die Druckplatten 5 bestehen in diesem Fall ebenfalls aus fasertechnischem Werkstoff und sind in einem spitzen Winkel a zur Faserrichtung der Faserstrangplatten 4 ausgerichtet und mit den beiden beidseitig vorgesehenen Faserstrangplatten 4 mittels Kleben oder einer gemeinsamen Harzmatrix verbunden. In der gezeigten Ausführung bilden zwei Druckplatten 5 zusammen ein V-förmiges Stützgebilde, und zwei derartige Stützgebilde sind übereinander am fasertechnischen Schaft angebracht. Die Zwischenräume 6a zwischen den Faserstrangplatten bzw. 6b zwischen den Druckplatten 5 können mit Faserwerkstoff oder anderem Material aufgefüllt sein.

Fig. 13 zeigt einen Schnitt durch den Fußbereich einer Laufschaufel für einen Turborotor, die als erfindungsgemäßes fasertechnisches Bauteil ausgebildet ist, um die beim Betrieb auftretenden hohen Fliehkräfte in den Rotorkörper einleiten zu können. Es handelt sich dabei um eine verstellbare, d. h. um ihre Längsachse 1 verschwenkbare Axialschaufel mit einem Schaufelblatt 2 und einem Schaufelfußbereich 3. Die Schaufel ist über ein Axiallager 12 im Rotor 6 abgestützt. Der Schaufelkörper ist in seiner Gesamtheit aus Faserstrangplatten 4 aufgebaut, wovon einige in der Fig. angedeutet sind. Im Fußbereich 3 sind zwischen die Faserstrangplatten 4 in erfindungsgemäß beschriebener Weise lamellenartig eine Vielzahl von Druckplatten 5 eingebettet. Die metallischen Druckplatten 5 bilden am Umfang des zylindrischen Schaufelfußes ein Gewinde 20 aus mit dem die Zugkräfte aus der Fliehbeanspruchung auf eine Gewindebüchse 18 übertragen werden. Die Gewindebüchse 18 stützt sich auf einen den fasertechnisch ausgebildeten Schaufelfuß umgebenden Formzylinder 23 ab, der seinerseits mittels eines Gewinderinges 14 am Schwenklager 12 abgestützt ist. Mit dem Formzylinder 23 ist ein Verstellhebel 24 drehsteif verbunden, so daß über dessen Betätigung eine Verschwenkung der Schaufel gegenüber dem Gehäuse 6 erfolgen kann. Die Gewindebüchse 18 erfüllt die Funktion des separaten Stützbauteils. Im einzelnen kann die Ausbildung und Anordnung der Druckplatten 5 so erfolgen, wie in den Fig. 1 bis 11 dargestellt. Insbesondere können zwei Reihen von Druckplatten 5 mit axialem Abstand vorgesehen sein.

## Patentansprüche

1. Zugbeanspruchtes fasertechnisches Bauteil, welches zumindest einendig von der Zugrichtung abweichende Abstützflächen für die formschlüssige Abstützung an einem separaten Stützbauteil aufweist mit einer Vielzahl von in Zugrichtung parallel ausgerichteter Faserstrangplatten (4), zwischen denen Druckplatten (5) angeordnet sind, welche über den die Zugbelastung aufnehmenden Querschnitt (q) der Faserstrangplatten hinausstehende Abschnitte aufweisen, die die Abstützflächen ausbilden, dadurch gekennzeichnet, daß mehrere Reihen von Druckplatten (5) in Zugrichtung (2) mit Abstand hintereinander formschlüssig in entsprechend unterbrochenen Faserstrangplatten (4a) oder in Matrixzwischenlagen (17) eingebettet sind.

2. Zugbeanspruchtes fasertechnisches Bauteil, welches zumindest einendig von der Zugrichtung abweichende Abstützflächen für die formschlüssige Abstützung an einem separaten Stützbauteil aufweist mit einer Vielzahl von in Zugrichtung parallel ausgerichteten Faserstrangplatten (4), zwischen denen Druckplatten (5) angeordnet sind, welche über den die Zugbelastung aufnehmenden Querschnitt (q) der Faserstrangplatten hinausstehende Abschnitte aufweisen, die die Abstützflächen ausbilden, dadurch gekennzeichnet, daß die Druckplatten (5) formschlüssig in entsprechend unterbrochene Faserstrangplatten (4a) oder in Matrixzwischenlagen (17) eingebettet sind und das Bauteil rotationssymmetrisch aufgebaut ist, wobei am Umfang ein die Druckplatten (5) und die Faserstrangplatten (4) erfassendes Gewinde (20) oder eine Ringnut (21) eingeschnitten ist.

3. Zugbeanspruchtes fasertechnisches Bauteil, welches zumindest einendig von der Zugrichtung abweichende Abstützflächen für die formschlüssige Abstützung an einem separaten Stützbauteil aufweist mit einer Vielzahl von in Zugrichtung parallel ausgerichteter Faserstrangplatten (4), zwischen denen Druckplatten (5) angeordnet sind, welche über den die Zugbelastung aufnehmenden Querschnitt (q) der Faserstrangplatten hinausstehende Abschnitte aufweisen, die die Abstützflächen ausbilden, dadurch gekennzeichnet, daß die Druckplatten 85) formschlüssig in entsprechend unterbrochenen Faserstrangplatten (4a) oder in Matrixzwischenlagen (17) eingebettet sind, wobei die Druckplatten unter einem spitzen Winkel zur Zugrichtung ausgerichtet sind.

4. Bauteil nach den Ansprüchen 1 oder 2 oder 3, dadurch gekennzeichnet, daß die Druckplatten (5) aus einem hohe Schubkräfte übertragenden homogenen Material, vorzugsweise Metall, Metalleinkristallfasern oder Keramik bestehen.

5. Bauteil nach den Ansprüchen 1 oder 2 oder 3, dadurch gekennzeichnet, daß die Druckplatten (5) zusätzlich zum Formschluß durch Kleben oder über eine gemeinsame Harzmatrix kraftschlüssig mit den Faserstrangplatten (4) verbunden sind.

6. Bauteil nach den Ansprüchen 1 oder 2 oder 3, dadurch gekennzeichnet, daß die Faserstrangplatten (4) aus Kohlefaser, Glasfaser, Aramidfaser oder Mischungen hiervon bestehen, welche in einer Matrix aus Epoxidharz oder Thermoharz liegen.

7. Bauteil nach den Ansprüchen 1 oder 2 oder 3, dadurch gekennzeichnet, daß die Druckplatten aus fasertechnischem Material bestehen, mit zur Zugrichtung unterschiedlicher Faserorientierung.

8. Bauteil nach Anspruch 2, dadurch gekennzeichnet, daß die Randzonen in Richtung quer zur Ebene der Faserstrangplatten (5) beidseitig durch Druckplatten größerer Dicke (5') gebildet werden.

9. Bauteil nach Anspruch 3, dadurch gekennzeichnet, daß eine Stützplatte (10) in der Bauteilmitte angeordnet ist, an der sich die Druckplatten (5) mit ihren innenseitigen Enden abstützen.

10. Laufschaufel für einen Turborotor mit einem zur Abstützung der Fliehkräfte ausgebildeten Schaufelfuß, dadurch gekennzeichnet, daß sie als fasertechnisches Bauteil nach einem der Ansprüche 1 - 9 aufgebaut ist.

11. Verfahren zur Herstellung eines Bauteils nach einem der Ansprüche 1 - 10, dadurch gekennzeichnet, daß abwechselnd in Zugrichtung orientierte Faserstrangplatten (4, 4') und von der Zugrichtung abweichend orientierte Druckplatten (5, 5') aufeinander gelegt werden, mit Harz versetzt werden, und bei Aushärtetemperatur unter Druck zusammengefügt werden und daß die Endkontur des Bauteils (1) durch Fräsen bzw. Drehen des ausgehärteten Rohlings auf Endmaß erzeugt wird.

## Claims

1. A technical fibre structural part subjected to tensile stress, which has supporting faces, deviating from the tensile direction at least at one end, for form-engaging support against a separate supporting structural part, having a plurality of extruded fibre plates (4) which are aligned parallel in the tensile direction and between which there are arranged pressure plates (5) which have portions projecting beyond the cross-section (q) of the extruded fibre plates taking up the tensile load and which form the supporting faces, characterized in that a plurality of rows of pressure plates (5) are embedded, in the tensile direction (2), spaced one behind the other with form engagement in appropriately interrupted extruded fibre plates (4a) or in matrix intermediate layers (17).

2. A technical fibre structural part subjected to tensile stress, which has supporting faces, deviating from the tensile direction at least at one end, for form-engaging support against a separate supporting structural part, having a plurality of extruded fibre plates (4) which are aligned parallel in the tensile direction and between which there are arranged pressure plates (5) which have portions projecting beyond the cross-section (q) of the extruded fibre plates taking up the tensile load and which form the supporting faces, characterized in that the pressure plates (5) are embedded with form engagement in appropriately interrupted extruded fibre plates (4a) or in matrix intermediate layers (17) and the structural part is constructed to have rotational symmetry, wherein a thread (20) or an annular groove (21) which grips the pressure plates (5) and the extruded fibre plates (4) is cut into the periphery.

3. A technical fibre structural part subjected to tensile stress, which has supporting faces, deviating from the tensile direction at least at one end, for form-engaging support against a separate supporting structural part, having a plurality of extruded fibre plates (4) which are aligned parallel in the tensile direction and between which there are arranged pressure plates (5) which have portions projecting beyond the cross-section (q) of the extruded fibre plates taking up the tensile load and which form the supporting faces, characterized in that the pressure plates (5) are embedded with form engagement in appropriately interrupted extruded fibre plates (4a) or in matrix intermediate layers (17), wherein the pressure plates are aligned at an acute angle to the tensile direction.

4. A structural part according to Claims 1 or 2 or 3, characterized in that the pressure plates (5) comprise a homogeneous material which transmits high shear forces, preferably metal, metal single-crystal fibres or ceramic.

5. A structural part according to Claims 1 or 2 or 3, characterized in that the pressure plates (5) are connected to the extruded fibre plates (4) by a force engagement in addition to the form engagement by adhesion or by way of a common resin matrix.

6. A structural part according to Claims 1 or 2 or 3, characterized in that the extruded fibre plates (4) comprise carbon fibre, glass fibre, aramid fibre or mixtures thereof which lie in a matrix of epoxy resin or thermosetting resin.

7. A structural part according to Claims 1 or 2 or 3, characterized in that the pressure plates comprise technical fibre material with a fibre orientation which is different from the tensile direction.

8. A structural part according to Claim 2, characterized in that the marginal zones in the direction transverse with respect to the plane of the extruded fibre plates (5) are formed on both sides by pressure plates of a relatively large thickness (5').

9. A structural part according to Claim 3, characterized in that a supporting plate (10) is arranged in the centre of the structural part and the pressure plates (5) are supported thereon by means of their inner ends.

10. A rotating blade for a turbo rotor, having a blade base which is constructed to withstand the centrifugal forces, characterized in that it is constructed as a technical fibre structural part according to one of Claims 1 - 9.

11. A method of producing a structural part according to one of Claims 1 - 10, characterized in that extruded fibre plates (4, 4') oriented in the tensile direction and pressure plates (5, 5') oriented to deviate from the tensile direction are alternately laid on top of one another, are set with resin, and are joined together at a curing temperature under pressure, and in that the final contour of the structural part (1) is produced by milling or lathing the cured blank to give the final dimension.

## Revendications

1. Elément structurel en fibres techniques sollicité en traction, qui présente au moins des surfaces d'appui s'écartant, à une extrémité, de la direction de traction, pour réaliser un appui par engagement positif sur un élément structurel d'appui séparé, avec une multiplicité de plaques d'écheveaux de fibres (4) orientées parallèlement dans le sens de la traction et entre lesquelles sont disposées des plaques de pression (15) qui présentent des sections en saillie sur la section transversale (q) des plaques d'écheveaux de fibres recevant la charge de traction, sections qui constituent les surfaces d'appui, élément structurel caractérisé en ce que l'on incorpore plusieurs séries de plaques de pression (5) dans le sens de la traction (2), à distance les unes derrière les autres, par engagement positif dans des plaques d'écheveaux de fibres (4a) interrompues en conséquence, ou dans des couches intermédiaires de matrice (17).

2. Elément structurel en fibres techniques sollicité en traction, qui présente au moins des surfaces d'appui s'écartant, à une extrémité, de la direction de traction, pour réaliser un appui par engagement positif sur un élément structurel d'appui séparé, avec une multiplicité de plaques d'écheveaux de fibres (4) orientées parallèlement dans le sens de la traction et entre lesquelles sont disposées des plaques de pression (15), qui présentent des sections en saillie sur la section transversale (q) des plaques d'écheveaux de fibres recevant la charge de traction, sections qui constituent les surfaces d'appui, élément structurel caractérisé en ce que les plaques de pression (5) sont incorporées par engagement positif dans des plaques d'écheveaux de fibres (4a) interrompues en conséquence, ou dans des couches intermédiaires de matrice (17), et en ce que l'élément structurel est construit de façon symétrique en rotation, un filetage (20) agrippant les plaques de pression (5) et les plaques d'écheveaux de fibres (4), ou une rainure annulaire (21) étant creusée sur le pourtour.

3. Elément structurel en fibres techniques sollicité en traction, qui présente au moins des surfaces d'appui s'écartant, à une extrémité, de la direction de traction, pour réaliser un appui par engagement positif sur un élément structurel d'appui séparé, avec une multiplicité de plaques d'écheveaux de fibres (4) orientées parallèlement dans le sens de la traction et entre lesquelles sont disposées des plaques de pression (15) qui présentent des sections en saillie sur la section transversale (q) des plaques d'écheveaux de fibres recevant la charge de traction, sections qui constituent les surfaces d'appui, élément structurel caractérisé en ce que les plaques de pression (5) sont incorporées par engagement positif dans des plaques d'écheveaux de fibres interrompues en conséquence (4a), ou dans des couches intermédiaires de matrice (17), les plaques de pression formant un angle aigu par rapport au sens de la traction.

4. Elément structurel selon les revendications 1, 2 ou 3, caractérisé en ce que les plaques de pression (5) sont en matériau homogène transmettant des forces de cisaillement élevées, comme de préférence un métal, des fibres d'un métal monocristallin ou de la céramique.

5. Elément structurel selon les revendications 1, 2 ou 3, caractérisé en ce que les plaques de pression (5) sont reliées, en plus de l'engagement positif, par de la colle ou par l'intermédiaire d'une matrice commune de résine, par adhérence aux plaques d'écheveaux de fibres (4).

6. Elément structurel selon les revendications 1, 2 ou 3, caractérisé en ce que les plaques d'écheveaux de fibres (4) sont en fibres de carbone, en fibres de verre, en fibres d'aramide ou en un mélange de ces matières, ces fibres étant dans une matrice en résine epoxy ou en résine thermodurcissable.

7. Elément structurel selon les revendications 1, 2 ou 3, caractérisé en ce que les plaques de pression sont en une matière à base de fibres techniques avec une orientation des fibres différente du sens de la traction.

8. Elément structurel selon la revendication 2, caractérisé en ce que les zones de bordures sont formées, dans le sens perpendiculaire au plan des plaques d'écheveaux de fibres (5), des deux côtés par des plaques de pression de plus grande épaisseur (5').

9. Elément structurel selon la revendication 3, caractérisé en ce que l'on dispose, dans le milieu de l'élément structurel, une plaque d'appui (10) sur laquelle s'appuient les plaques de pression (5) par leurs extrémités situées du côté intérieur.

10. Aube pour un rotor de turbine avec un pied constitué pour l'appui des forces centrifuges, aube caractérisée en ce qu'elle est construite sous la forme d'un élément structurel en fibres techniques selon l'une des revendications 1 à 9.

11. Procédé de fabrication d'un élément structurel selon l'une des revendications 1 à 10, caractérisé en ce que l'on pose les unes sur les autres, de façon alternée, des plaques d'écheveaux de fibres (4, 4') orientées dans le sens de la traction et des plaques de pression (5, 5') orientées en s'écartant du sens de la traction, on les amalgame avec de la résine et on les joint sous pression à la température de durcissement de la résine, et en ce que l'on réalise le contour final de l'élément structurel (1) à la cote finale par fraisage ou tournage de l'ébauche durcie.
